# EUROPEAN PATENT SPECIFICATION

(11) **EP 3 225 430 B1**
(45) Date of publication and mention of the grant of the patent: **08.01.2020**
(21) Application number: 16742950.5
(22) Date of filing: 20.01.2016
(51) Int. Cl.: B60C 13/00

(54) **PNEUMATIC TIRE**
LUFTREIFEN
PNEUMATIQUE

(30) Priority: 29.01.2015 JP 2015015807
(43) Date of publication of application: 04.10.2017
(73) Proprietor: Bridgestone Corporation, Tokyo 104-8340 (JP)
(72) Inventor: IWABUCHI, Sotaro, Tokyo 104-8340 (JP)
(74) Representative: Lamb, Martin John Carstairs
(86) International application number: PCT/JP2016/000278
(87) International publication number: WO 2016/121345

(56) References cited:
- EP-A1- 1 859 963
- WO-A1-97/17217
- JP-A- H0 986 106
- JP-A- H08 282 215
- JP-A- 2000 513 290
- US-A1- 2010 051 159

## Description

### TECHNICAL FIELD

This disclosure relates to a pneumatic tire.

### BACKGROUND

Conventionally, in a pneumatic tire, a corporate name, brand name, tire size, manufacturing date, or other information is displayed on the outer surfaces of the tire side portions, which include the outer surfaces of the sidewall portions and the bead portions. Such information is displayed by a marking portion that includes one or more markings constituted by one or more of a letter, a graphic, a symbol including a barcode, or a pattern or the like. Such markings on the surface of the tire side portion are formed by an uneven surface, such as projections, recesses, or ridges, or by printing (for example, see JP 2008-201384 A (PTL 1)). Reference is also made to WO 97/17217 which discloses an improved tire sidewall and EP 1859963 which discloses a tire comprising an endless decorative band on a surface of a sidewall.

### CITATION LIST

### Patent Literature

PTL 1: JP 2008-201384 A

### SUMMARY

### (Technical Problem)

The ridges are formed by minute elevations. When multiple ridges are arranged and the tire is viewed from the side, light from a direction orthogonal to the ridges is reflected, thereby improving the visibility of the marking. Because of this effect, ridges are provided on the inside of the marking in some pneumatic tires. In a conventional pneumatic tire, however, curved spiral ridges that are inclined with respect to a radial line extending in the tire radial direction or linear radial ridges that extend in the tire radial direction are provided inside the marking. Therefore, in a conventional pneumatic tire, the direction in which the ridges extend changes depending on the position in the marking. As a result, when the circumferential dimension of the marking portion is long, due to a plurality of markings being aligned in the circumferential direction, the visibility of the marking may differ greatly at the circumferential edges of the marking portion. It may therefore be difficult to improve the visibility of the marking portion.

It would therefore be helpful to provide a pneumatic tire that improves the visibility of the marking portion regardless of the length of the marking portion in the circumferential direction.

### (Solution to Problem)

A summary of this disclosure is as follows.

A pneumatic tire according to this disclosure comprises a marking portion on an outer surface of a tire side portion, the marking portion including more than one marking constituted by a letter or a symbol, wherein in a side view of the tire, the marking portion has a curved shape; linear ridges are arranged in the markings of the marking portion; and all of the ridges in the marking portion are parallel, characterized in that 0° ≤ θ ≤ 5°, where θ is an angle between the ridges and a tire radial direction at a center of the marking portion in the tire circumferential direction.

The below-described "center of the marking portion in the tire circumferential direction" refers to the center of the marking portion in the tire circumferential direction between i) the edge, on one side in the tire circumferential direction, of the marking at the edge on one side in the tire circumferential direction and ii) the edge, on the other side in the tire circumferential direction, of the marking at the edge on the other side in the tire circumferential direction.

### (Advantageous Effect)

According to this disclosure, a pneumatic tire that can improve the visibility of the marking portion regardless of the length of the marking portion in the circumferential direction can be provided.

### BRIEF DESCRIPTION OF THE DRAWINGS

In the accompanying drawings:
FIG. 1 is a schematic cross-sectional diagram in the tire width direction of a pneumatic tire according to one of the disclosed embodiments;
FIG. 2 is a view of the pneumatic tire according to one of the disclosed embodiments from the width direction;
FIG. 3 is an enlarged view of the marking portion in FIG. 2;
FIG. 4 is an enlarged view of the marking portion in another embodiment, which is not part of the present invention;
FIG. 5 is an enlarged view of the marking portion in yet another embodiment, which is not part of the present invention; and
FIG. 6A through FIG. 6E illustrate the angle between the ridges and the tire radial direction at the center of the marking portion in the tire circumferential direction in tires of Examples 1 and 2, Reference Examples 3 to 6 and Comparative Examples 1 and 2.

### DETAILED DESCRIPTION

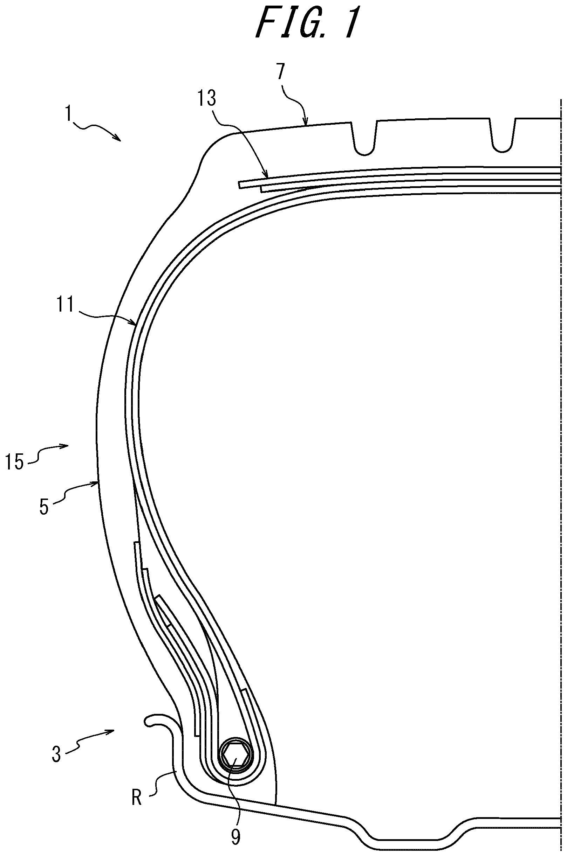

The following describes embodiments of this disclosure in detail with reference to the drawings. FIG. 1 is a schematic cross-sectional diagram in the tire width direction of a pneumatic tire (also referred to below simply as a tire) according to one of the disclosed embodiments. In FIG. 1, each constituent member is illustrated schematically to facilitate comprehension. Therefore, the constituent members illustrated in FIG. 1 may differ in shape, dimensions, or the like from actual constituent members. FIG. 1 shows a cross-sectional view in the width direction of the tire in a standard state where the tire has been mounted on an applicable rim and inflated at the prescribed internal pressure with no load exerted thereon.

As used herein, an "applicable rim" refers to a standard rim specified by the standards below in accordance with tire size ("Design Rim" in the YEAR BOOK of the below-mentioned TRA, and "Measuring Rim" in the STANDARDS MANUAL of the below-mentioned ETRTO), and "prescribed internal pressure" refers to air pressure specified by the standards below in accordance with the maximum load capability. The standards are determined by valid industrial standards for the region in which the tire is produced or used, such as the "YEAR BOOK" of the "Tire and Rim Association, Inc." (TRA) in the United States of America, the "STANDARDS MANUAL" of the "European Tyre and Rim Technical Organisation" (ETRTO) in Europe, and the "JATMA YEAR BOOK" of the "Japan Automobile Tyre Manufacturers Association" (JATMA) in Japan.

As illustrated in FIG. 1, the tire (pneumatic tire) 1 of this embodiment includes a pair of bead portions 3, a pair of sidewall portions 5 extending in the tire radial direction from the bead portions 3, and a tread portion 7 extending between the sidewall portions 5. On the inside, the tire 1 includes a carcass 11 and a belt 13. The carcass 11 includes at least one carcass layer that extends toroidally across the bead portions 3, the sidewall portions 5, and the tread portion 7, and the edges of the carcass 11 are folded up around bead cores 9 embedded in the bead portions 3. The belt 13 includes at least one belt layer disposed on the tire radial direction outside of the carcass 11.

As illustrated in FIG. 1, a tire side portion 15 includes the sidewall portion 5 and the bead portion 3. In greater detail, the tire side portion 15 refers to the range from the outer edge of the tread surface in the tire width direction to the portion where the bead portion 3 engages the rim R. As referred to here, the "tread surface" is the outer (circumferential) surface, around the entire circumference of the tire, that comes into contact with the road surface when the tire is assembled on an applicable rim, inflated to the prescribed internal pressure, and driven with a load corresponding to the maximum load capability applied.

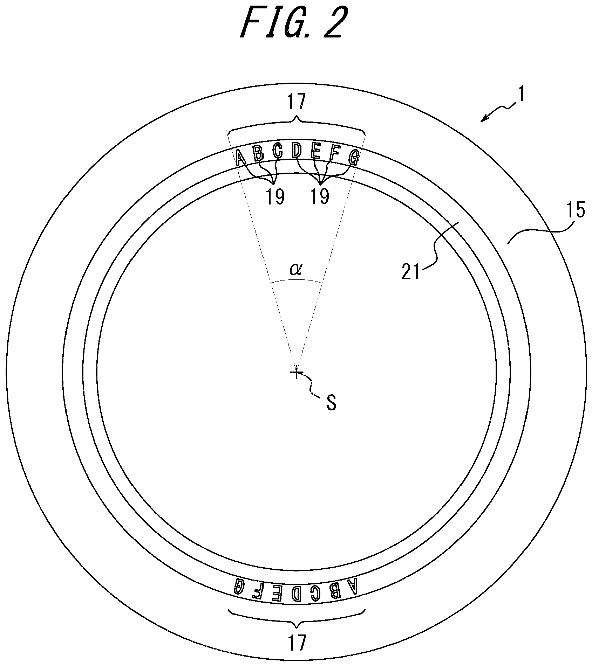

FIG. 2 illustrates the tire 1 from the width direction when the tire 1 is in a state of having been assembled on an applicable rim and inflated to the prescribed internal pressure, with no load applied. As illustrated in FIG. 2, the tire 1 includes a marking portion 17 in at least a partial region of the outer surface of at least one of the tire side portions 15 (only one tire side portion 15 in this example). In this embodiment, the marking portion 17 is formed inward in the radial direction from the tire maximum width position of the tire side portion 15. The marking portion 17 in this embodiment has a plurality of markings 19 that are constituted by predetermined letters and are recessed in the tire width direction. The markings may also be symbols including barcodes. The markings 19 of this embodiment are recessed in the tire width direction by a maximum of 1.0 mm from the outer surface of the tire side portion 15 as compared to the case of not forming the markings 19. In this embodiment, all of the markings 19 of the marking portion 17 are entirely recessed to an approximately uniform degree from the outer surface of the tire side portion 15.

The marking portion 17 has a curved shape. In this embodiment, the plurality of markings 19 are arranged in the tire circumferential direction. Seven markings 19, from "A" to "G", are arranged in the tire circumferential direction in this embodiment. Therefore, the marking portion 17 in this embodiment has an arc shape. The marking portion 17 of this embodiment is formed on a portion of an annular smooth portion 21 with a smooth surface in the tire circumferential direction. In other words, in this embodiment, the area surrounding the markings 19 on the outer circumferential surface of the tire side portion 15 is covered by a smooth surface with no ridges. As illustrated in FIG. 2, in this embodiment, two marking portions 17 are arranged opposing each other on the annular smooth portion 21. While not illustrated, a marking portion other than the marking portion 17 may be formed on the tire of this disclosure. This other marking portion may include markings formed by an uneven surface, such as projections, recesses, or ridges, or by printing.

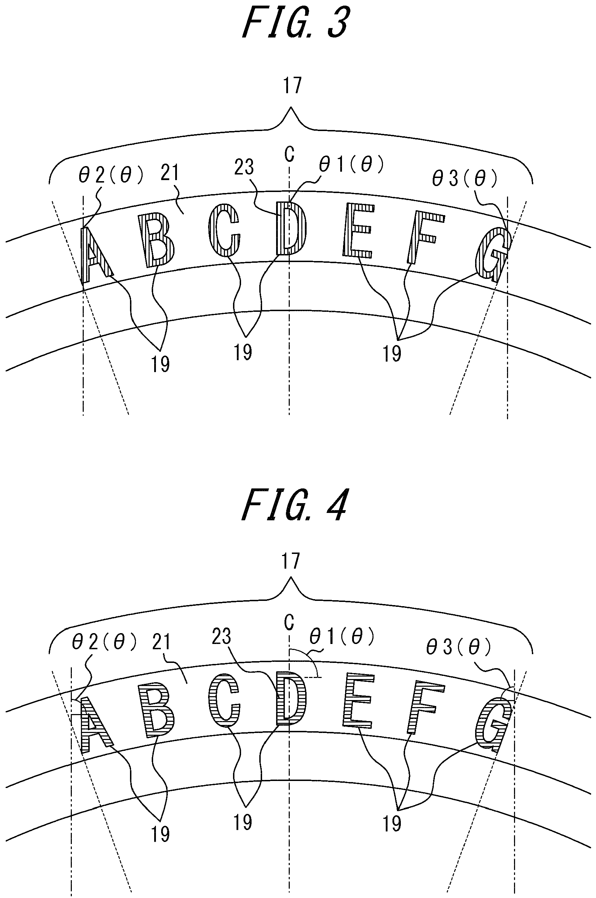

FIG. 3 is an enlarged view of the marking portion 17 in FIG. 2. As illustrated in FIG. 3, linear ridges 23 are arranged in each of the markings 19 of the marking portion 17. In this embodiment, all of the ridges 23 arranged in the markings 19 of the marking portion 17 are parallel. In this embodiment, the ridges 23 are formed so that the interval between the apex of adjacent ridges 23 becomes 0.8 mm and so that the inclination angle at one side of the ridges becomes 35°.

In the case of the tire including a plurality of marking portions, it suffices in this disclosure for linear ridges to be arranged in the markings of at least one marking portion. In other words, as long as linear ridges are arranged in the markings of at least one marking portion, radial ridges may be arranged in the other marking portion(s). The visibility of the marking portions can be further enhanced by combining a marking portion having linear ridges arranged therein with a marking portion having radial ridges arranged therein. Also, since radial ridges exhibit little change in angle relative to the tire radial direction as compared to parallel ridges, the crack durability of the ridges can be made more uniform within the marking portion. In particular, when the intersection point of each ridge among the radial ridges (the center of the radial ridges) matches the tire rotation axis, the angle of each ridge relative to the tire radial direction is identical. Therefore, the crack durability of each ridge can be made more uniform. Note that from a manufacturing perspective, when the tire includes both a marking portion in which linear ridges are arranged and a marking portion in which radial ridges are arranged, the marking portion in which linear ridges are arranged and the marking portion in which radial ridges are arranged are preferably not provided at overlapping positions in the tire circumferential direction.

In this embodiment, the ridges 23 are provided so that an angle θ1 satisfies the relationship 0° ≤ θ ≤ 5°. The angle θ1 is the angle between the tire radial direction at a center C in the tire circumferential direction and each of i) the edge, on one side in the tire circumferential direction, of the marking 19 "A" at the edge on one side in the tire circumferential direction and ii) the edge, on the other side in the tire circumferential direction, of the marking 19 "G" at the edge on the other side in the tire circumferential direction of the marking portion 17. In other words, in this embodiment, the ridges 23 are arranged so that an angle θ2 and an angle θ3 are equivalent to the angle θ1. The angle θ2 is the angle between i) the ridge 23 at the edge, on one side in the tire circumferential direction, of the marking 19 "A" at the edge on one side in the tire circumferential direction and ii) a line parallel to the tire radial direction at the center C in the tire circumferential direction. The angle θ3 is the angle between i) the ridge 23 at the edge, on the other side in the tire circumferential direction, of the marking 19 "G" at the edge on the other side in the tire circumferential direction and ii) a line parallel to the tire radial direction at the center C in the tire circumferential direction. In greater detail, in this embodiment, the ridges 23 are arranged to be parallel to the tire radial direction at the above-described center in the tire circumferential direction (θ1 = θ2 = θ3 = 0°).

In this embodiment, as illustrated in FIG. 2, the marking portion 17 is configured so that the circumferential edges centering on the tire rotation axis S, i.e. the central angle α between i) the edge, on one side in the tire circumferential direction, of the marking 19 "A" at the edge on one side in the tire circumferential direction and ii) the edge, on the other side in the tire circumferential direction, of the marking 19 "G" at the edge on the other side in the tire circumferential direction satisfies the relationship 40° ≤ α ≤ 70°.

In this way, the tire according to one of the embodiments of this disclosure includes a marking portion 17 on the outer surface of the tire side portion 15, and the marking portion 17 has markings 19 that include the predetermined letters "A" to "G". In a side view of the tire, the marking portion 17 is curved in the shape of an arc, and straight ridges 23 are arranged in the markings 19 of the marking portion 17. The ridges 23 in the marking portion 17 are all parallel (θ1 = θ2 = θ3).

The following describes the effects of the tire according to this embodiment.

The tire according to one of the embodiments of this disclosure includes more than one marking 19 constituted by a letter or a symbol, the marking portion 17 has a curved shape, and straight ridges 23 in the marking portion 17 are all arranged in parallel. Therefore, in the tire according to one of the embodiments of this disclosure, the direction in which the ridges 23 extend does not change at different positions within the marking portion 17. As a result, the proportion of light that strikes the side surface of the tire and is reflected by the ridges does not change. Even when the marking portion 17 is elongated in the circumferential direction, a large change in visibility can be suppressed at the markings 19, including "A" and "G" at the circumferential edges.

Accordingly, in the pneumatic tire of this embodiment, variation in the visibility of the marking portion 17 can be suppressed, and the visibility of the marking portion 17 can be improved.

In the tire according to one of the embodiments of this disclosure, the ridges 23 are arranged so that the angle θ between the ridges 23 and the tire radial direction at the center of the marking portion 17 in the tire circumferential direction satisfies the relationship 0° ≤ θ ≤ 5°. According to this configuration, since the direction of extension of the ridges 23 includes no component in the tire circumferential direction, propagation of a circumferential crack is blocked by the ridges 23 even if a crack occurs in the ridges 23. Hence, propagation of a circumferential crack in the sidewall portion 5 can be suppressed.

FIG. 4 is an enlarged view of the marking portion 17 in another embodiment, which is not part of the present invention. In this embodiment, the ridges 23 are arranged so that the angle θ between the ridges 23 and the tire radial direction at the above-described center C of the marking portion 17 in the tire circumferential direction satisfies the relationship 85° ≤ θ ≤ 90°. In greater detail, the ridges 23 in this embodiment are arranged so that θ1 = θ2 = θ3 = 90°.

In the tire of this embodiment, the ridges 23 are arranged so that the angle θ between the ridges 23 and the tire radial direction at the center C of the marking portion 17 in the tire circumferential direction satisfies the relationship 85° ≤ θ ≤ 90°. When the tire is viewed from the side of the vehicle while mounted on the vehicle, the marking portion 17 is at the most visible position when the position of the marking portion 17 in the vertical direction of the tire is in the middle of the tire. Therefore, with this configuration, at the position where the marking portion 17 is most visible, the ridges best reflect sunlight or artificial light from above in a side view of the tire, thereby maximizing the visibility of the marking portion 17.

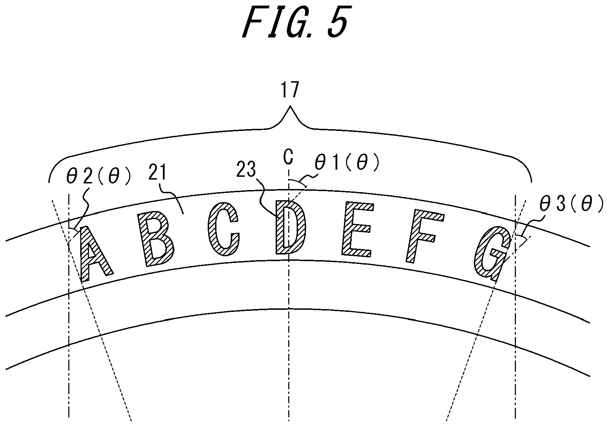

FIG. 5 is an enlarged view of the marking portion 17 in yet another embodiment, which is not part of the present invention. In this embodiment, the ridges 23 are arranged so that the angle θ between the ridges 23 and the tire radial direction at the above-described center C of the marking portion 17 in the tire circumferential direction satisfies the relationship 0° ≤ θ ≤ 45°. In greater detail, the ridges 23 in this embodiment are arranged so that θ1 = θ2 = θ3 = 45°.

In the tire of this embodiment, the ridges 23 are arranged so that the angle θ between the ridges 23 and the tire radial direction at the center C of the marking portion 17 in the tire circumferential direction satisfies the relationship 0° ≤ θ ≤ 45°. Therefore, the occurrence of a circumferential crack in the sidewall portion 5 can be suppressed while improving the visibility of the marking portion 17 overall, thus making tire durability compatible with visibility of the markings.

In the tires of these embodiments, the marking portion 17 is configured so that the central angle α, about the rotation axis S of the tire, between the circumferential edges of the marking portion 17 satisfies the relationship 40° ≤ α ≤ 70°. According to this configuration, the visibility of the marking portion up to the circumferential edges can be improved. In order to improve the visibility of the marking portion up to the circumferential edges, the relationship 50° ≤ α ≤ 60° is more preferably satisfied.

Embodiments of this disclosure have been described, but this disclosure is in no way limited to the above embodiments. For example, the marking portion 17 may be formed outward in the radial direction from the tire maximum width position of the tire side portion 15. The marking portion 17 and/or markings 19 may be a symbol including a barcode, or a combination with one or more letters. Furthermore, other than the marking portion 17, other markings formed by an uneven surface, such as projections, recesses, or ridges, or by the unevenness of printing may be included. A variety of other changes and modifications may be made.

### EXAMPLES

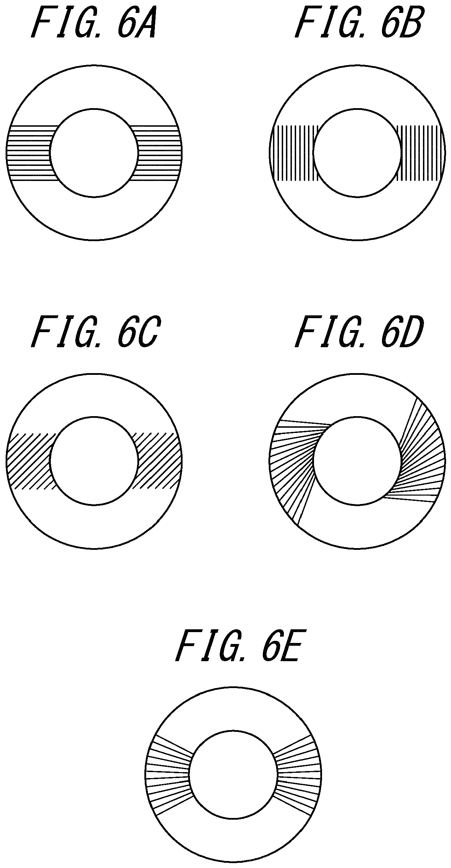

To verify the effects of the tire disclosed herein, prototypes of tires according to Examples 1 and 2, Reference Examples 3 to 6 and of tires according to Comparative Examples 1 and 2 were produced. A test was run to evaluate the visibility of the marking portion, and a test was run to evaluate the suppression of circumferential cracks. The tests were run by assembling the above tires with a tire size of 205/55R16 onto a 16 -7J applicable rim, applying an internal pressure of 220 kPa, and mounting the tires onto a vehicle. As illustrated in FIG. 2, the tires according to Examples 1 and 2, Reference Examples 3 to 6 and Comparative Examples 1 and 2 include two marking portions 17. Each marking portion 17 has seven markings 19. The marking portion 17 is formed so that the inner edge in the tire radial direction is positioned 10 mm inward in the tire radial direction from the tire maximum width position of the tire side portion 15. The tire circumferential direction dimension of the marking portion 17 at the inner edge in the tire radial direction of the tires according to Example 1 and Reference Examples 3 and 5 is 1536 mm, and the central angle α, about the tire rotation axis, between the circumferential edges is 60°. The tire circumferential direction dimension of the marking portion 17 at inner edge in the tire radial direction of the tires according to Example 2 and Reference Examples 4 and 6 is 1536 mm, and the central angle α, about the tire rotation axis, between the circumferential edges is 80°. In the tires according to Examples 1 and 2, as illustrated in FIG. 6A, the angle between the ridges and the radial direction at the center of the marking portion is 0°. In the tires according to Reference Examples 3 and 4, as illustrated in FIG. 6B, the angle between the ridges and the radial direction at the center of the marking portion is 90°. In the tires according to Reference Examples 5 and 6, as illustrated in FIG. 6C, the angle between the ridges and the radial direction at the center of the marking portion is 45°. In the tire according to Comparative Example 1, the ridges are spiral, and in the tire according to Comparative Example 2, the ridges are radial.

### <Visibility of Marking Portion>

For the tires according to Examples 1 and 2, Reference Examples 3 to 6 and Comparative Examples 1 and 2, the tire was first assembled onto a rim and inflated to the corresponding internal pressure. The tire was then mounted on a roller-type rotating base and rotated. An observer standing 2 m away visually judged the visibility of the marking portion. The visibility was evaluated visually at one of three levels by 30 observers. The visibility was evaluated as being "excellent" when the edges and the center of the marking portion were all clearly visible, as "good" when either the edges or the center of the marking portion was clearly visible, and "fair" when neither the edges nor the center of the marking portion was clearly visible. The evaluation in the table indicates the most frequent evaluation result among the evaluation results of the 30 observers.

### <Test to Evaluate Crack Resistance>

For the tires according to Examples 1 and 2, Reference Examples 3 to 6 and Comparative Examples 1 and 2, a drum test (10,000 km test) was performed by running each tire at a drum speed of 60 km/h over 10,000 km with a drum load of 615 kg applied (JATMA maximum load). A drum test over 20,000 km (20,000 km test) and a drum test over 30,000 km (30,000 km test) were also performed, with other conditions being the same as in the 10,000 km test. After applying the drum load, the crack resistance was evaluated by visually determining whether a circumferential crack was present for each of the 10,000 km test, 20,000 km test, and 30,000 km test. A tire in which no circumferential crack occurred in the 10,000 km test but a circumferential crack occurred in the 20,000 km test was evaluated as "fair." A tire in which no circumferential crack occurred in the 20,000 km test but a circumferential crack occurred in the 30,000 km test was evaluated as "good." A tire in which no circumferential crack occurred in the 30,000 km test was evaluated as "excellent."

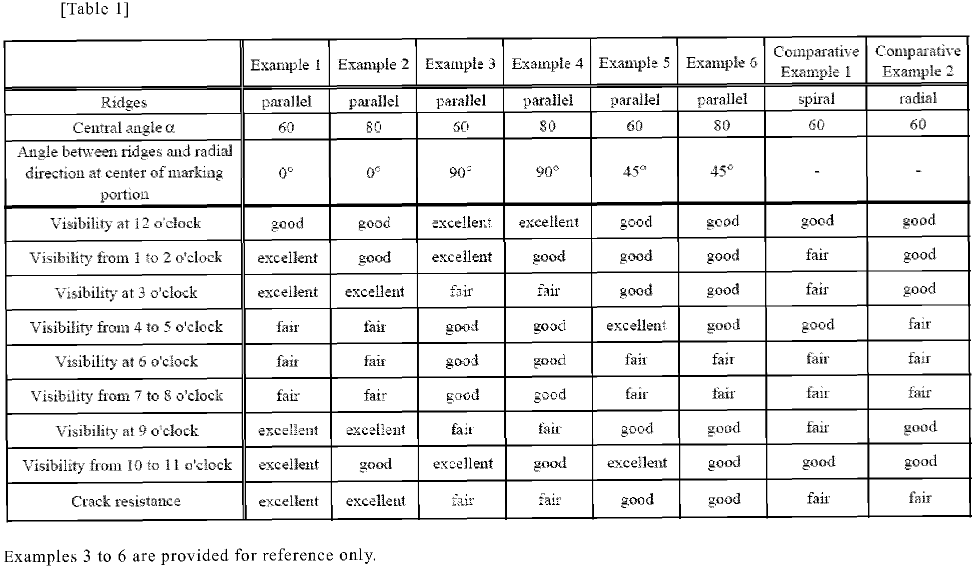

As illustrated in Table 1, each of the tires according to Examples 1 and 2, Reference Examples 3 to 6 had better visibility of the markings overall, regardless of the circumferential length of the markings, than in the tires according to Comparative Examples 1 and 2, without a reduction in crack resistance. In greater detail, the crack resistance was particularly superior in the tires of Examples 1 and 2, in which the angle between the ridges at the marking portion center and the radial direction was 0°. The visibility of the markings was particularly superior in the tires of Reference Examples 3 and 4, in which the angle between the ridges at the marking portion center and the radial direction was 90°. Tire durability and visibility of the markings were made compatible in the tires of Reference Examples 5 and 6, in which the angle between the ridges at the marking portion center and the radial direction was 45°. In Example 1 and Reference Examples 3 and 5, the central angle α, about the tire rotation axis, between the circumferential edges satisfies the relationship 40° ≤ α ≤ 70°, whereas in Example 2 and Reference Examples 4 and 6, the relationship 70° < α holds. A comparison between the Examples in which the angle between the ridge at the marking portion center and the radial direction was the same, i.e. Examples 1 and 2, Reference Examples 3 and 4, and Reference Examples 5 and 6, reveals that Example 1 and Reference Examples 3 and 5 respectively have higher visibility than Example 2 and Reference Examples 4 and 6.

### INDUSTRIAL APPLICABILITY

According to this disclosure, a pneumatic tire that can improve the visibility of the marking portion regardless of the length of the marking portion in the circumferential direction can be provided.

### REFERENCE SIGNS LIST

- 1: Tire (pneumatic tire)
- 3: Bead portion
- 5: Sidewall portion
- 7: Tread portion
- 9: Bead core
- 11: Carcass layer
- 13: Belt layer
- 15: Tire side portion
- 17: Marking portion
- 19: Marking
- 21: Smooth portion
- 23: Ridge
- C: Center

## Claims

1. A pneumatic tire (1) comprising a marking portion (17) on an outer surface of a tire side portion (15), the marking portion (17) including more than one marking (19) constituted by a letter or a symbol, wherein in a side view of the tire (1),
the marking portion (17) has a curved shape;
linear ridges (23) are arranged in the markings (19) of the marking portion (17); and
all of the ridges (23) in the marking portion (17) are parallel, **characterized in that** 0° ≤ θ ≤ 5°, where θ is an angle between the ridges (23) and a tire radial direction at a center (C) of the marking portion (17) in the tire circumferential direction.

2. The pneumatic tire (1) of claim 1, wherein 40° ≤ α ≤ 70°, where α is a central angle, about a tire rotation axis, between circumferential edges of the marking portion (17).

## Patentansprüche

1. Luftreifen (1), der einen Markierungsabschnitt (17) auf einer Außenfläche eines Reifenseitenabschnitts (15) umfasst, wobei der Markierungsabschnitt (17) mehr als eine Markierung (19) einschließt, die durch einen Buchstaben oder ein Symbol dargestellt wird, wobei in einer Seitenansicht des Reifens (1)
der Markierungsabschnitt (17) eine gekrümmte Form aufweist,
lineare Stege (23) in den Markierungen (19) des Markierungsabschnitts (17) angeordnet sind und
alle Stege (23) in dem Markierungsabschnitt (17) parallel sind,
**dadurch gekennzeichnet, dass**
0° ≤ θ ≤ 5°, wobei θ ein Winkel zwischen den Stegen (23) und einer Reifenradialrichtung an einer Mitte (C) des Markierungsabschnitts (17) in der Reifenumfangsrichtung ist.

2. Luftreifen (1) nach Anspruch 1, wobei 40° ≤ α ≤ 70°, wobei α ein Mittelwinkel, um eine Reifendrehachse, zwischen umlaufenden Kanten des Markierungsabschnitts (17) ist.

## Revendications

1. Bandage pneumatique (1), comprenant une partie de marquage (17) sur une surface externe d'une partie latérale du bandage pneumatique (15), la partie de marquage (17) incluant plus d'un marquage (19) constitué par une lettre ou un symbole, dans lequel, dans une vue latérale du bandage pneumatique (1),
la partie de marquage (17) a une forme courbée ;
des nervures linéaires (23) sont agencées dans les marquages (19) de la partie de marquage (17) ; et
toutes les nervures (23) dans la partie de marquage (17) sont parallèles ; **caractérisé en ce que** :
0° ≤ θ < 5°, θ représentant un angle entre les nervures (23) et une direction radiale du bandage pneumatique, au niveau d'un centre (C) de la partie de marquage (17), dans la direction circonférentielle du bandage pneumatique.

2. Bandage pneumatique (1) selon la revendication 1, dans lequel 40° ≤ α < 70°, α représentant un angle central, autour d'un axe de rotation du bandage pneumatique, entre des bords circonférentiels de la partie de marquage (17).
